# EUROPEAN PATENT APPLICATION

(11) **EP 4 597 261 A1**
(43) Date of publication of application: **06.08.2025**
(21) Application number: 22960893.0
(22) Date of filing: 29.09.2022
(51) Int. Cl.: G06F 3/01

(54) **INFORMATION DISPLAY DEVICE**

(71) Applicant: Maxell, Ltd., Kyoto 618-8525 (JP)
(72) Inventor: YOSHIZAWA Kazuhiko, Otokuni-gun, Kyoto 618-8525 (JP); KABUTO Nobuaki, Otokuni-gun, Kyoto 618-8525 (JP); HASHIMOTO Yasunobu, Otokuni-gun, Kyoto 618-8525 (JP); AKIYAMA Hitoshi, Otokuni-gun, Kyoto 618-8525 (JP)
(74) Representative: Mewburn Ellis LLP
(86) International application number: PCT/JP2022/036351
(87) International publication number: WO 2024/069831

(57) **Abstract**

An information processing apparatus characterized by including a processor, and the processor moves a self-area set by the user in accordance with the user's movement, determines the presence of obstacles that should be warned based on the self-area.

## Description

### Technical Field

This invention relates to an information processing apparatus.

### Background Art

For example, virtual space (Virtual Reality) is used in various fields such as gaming, education, and tourism. To experience this virtual space (hereinafter referred to as VR space), a head mounted display (Head Mounted Display), which is an example of an information processing apparatus, is used, for example. A head mounted display (hereinafter referred to as HMD) is an apparatus that, as an example, is worn on the head and displays virtual space images on a goggle-like display. This apparatus is equipped with, as an example, a camera, a sensor to measure the distance to an object, several sensors such as a position measurement sensor, a CPU for image processing, and a battery. When the wearer puts on this HMD and experiences a VR space, it is conceivable that the wearer may move around in the VR space depending on the content of the experience. However, the actual space where the wearer is located has various objects (obstacles) such as walls and desks, it limits the wearer's range of move around. Therefore, for safety reasons, a warning is given when the wearer of the HMD approaches an obstacle. As a technology of this kind, PTL 1 discloses a technology that makes it possible to suitably determine objects in the vicinity that should be warned as obstacles.

### Citation List

### Patent Literature

PTL 1: JP 2021-002290 A

### Summary of Invention

### Technical Problem

It is conceivable that the wearer sets a place of activity to avoid obstacles, i.e., a boundary where the wearer can safely move around, and then the wearer experiences the space output by the information processing apparatus. And, it is conceivable that if the wearer approaches or crosses the set boundary, the information processing apparatus could output a warning to make the wearer aware of the limits of his/her actions.

Here, if the boundary where the area where warnings are given is set to be wider than necessary, for example, warnings may be output even though there is no actual possibility of a collision, and the immersive experience may be hindered as a result. On the other hand, if the area where the warning is given is not appropriate, the warning may not be output even though there is a possibility of a collision. Therefore, it is considered an important issue to control the output of unnecessary warnings that hinder the immersive experience, and to set the areas where necessary warnings are output.

### Solution to Problem

According to the present invention, the following information processing apparatus is provided. This information processing apparatus is configured to include a processor. The processor moves a self-area set by the user in accordance with the user's movement, and determines the presence of obstacles that should be warned based on said self-area.

### Advantageous Effects of Invention

According to the present invention, it provides an information processing apparatus that enables the wearer to more suitably perceive the possibility of contact with objects in the real world, while taking into account the wearer's immersive experience. In addition, even if the situation changes as the wearer moves, it can be handled in the same way.

### Brief Description of Drawings

[FIG. 1A] FIG. 1A is a top view of an example of an information processing apparatus.
[FIG. 1B] FIG. 1B is a front view of an example of an information processing apparatus.
[FIG. 1C] FIG. 1C is a side view of an example of an information processing apparatus.
[FIG. 2A] FIG. 2A is a top view of an example of an information processing apparatus and shows an example of the imaging range of an external camera.
[FIG. 2B] FIG. 2B is a front view of an example of an information processing apparatus and shows an example of the imaging range of an external camera.
[FIG. 2C] FIG. 2C is a side view of an example of an information processing apparatus and shows an example of the imaging range of an external camera.
[FIG. 3] FIG. 3 is a block diagram showing an example of the hardware configuration of an information processing apparatus.
[FIG. 4] FIG. 4 is a functional block diagram to illustrate an example of the functions of an information processing apparatus.
[FIG. 5A] FIG. 5A is a front view of an example of a control apparatus.
[FIG. 5B] FIG. 5B is a side view of an example of a control apparatus.
[FIG. 6] FIG. 6 is a block diagram showing an example of the hardware configuration of the control apparatus.
[FIG. 7A] FIG. 7A is a flowchart for explaining an example of the overall process in self-area setting.
[FIG. 7B] FIG. 7B is a diagram for explaining the details of one example of the floor detection process.
[FIG. 7C] FIG. 7C is a diagram for explaining details of one example of the process of generating a trajectory.
[FIG. 7D] FIG. 7D is a diagram for explaining an example of a self-area based on the generated trajectory.
[FIG. 8] FIG. 8 is a flowchart illustrating an example of the warning process.
[FIG. 9A] FIG. 9A is a diagram for explaining an example of a self-area situation during user movement.
[FIG. 9B] FIG. 9B is a diagram for explaining an example of a self-area situation during user movement.
[FIG. 9C] FIG. 9C is a diagram for explaining an example of a self-area situation during user movement.
[FIG. 9D] FIG. 9D is a diagram for explaining an example of processing during warning display.
[FIG. 9E] FIG. 9E is a diagram for explaining an example of processing during warning display.
[FIG. 9F] FIG. 9F is a diagram for explaining an example of processing during warning display.
[FIG. 10A] FIG. 10A is a diagram for explaining an example of setting the self-area according to the speed of movement.
[FIG. 10B] FIG. 10B is a diagram for explaining an example of setting the self-area according to the user's posture.
[FIG. 11A] FIG. 11A is a diagram for explaining an example of the process of updating and expanding the self-area.
[FIG. 11B] FIG. 11B is a diagram for explaining an example of the process of updating and expanding the self-area.
[FIG. 12] FIG. 12 is a diagram for explaining an example of the process of updating a specific range of self-area.

### Description of Embodiments

Hereinafter, examples of embodiments of the invention will be described using the drawings. The same symbols are applied to similar configurations throughout the drawings, and duplicate explanations may be omitted.

### < First embodiment >

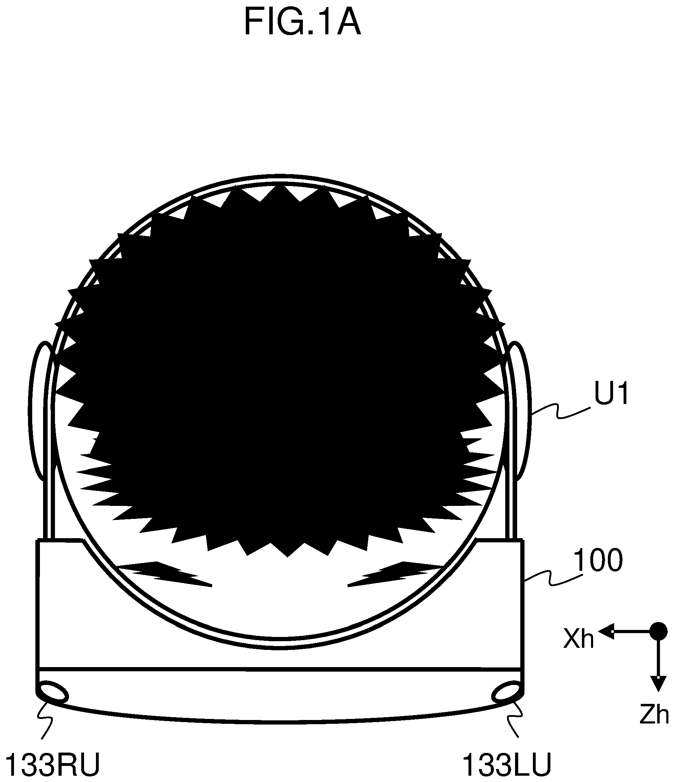

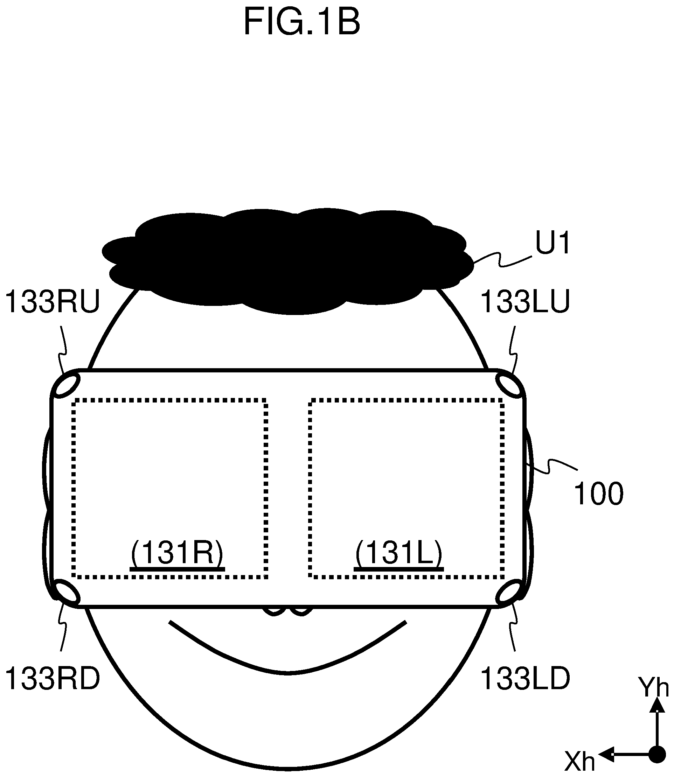

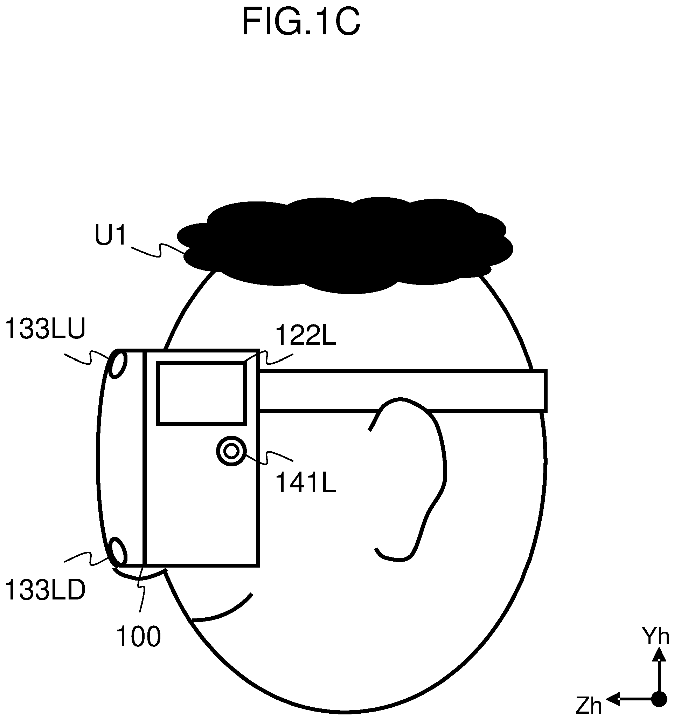

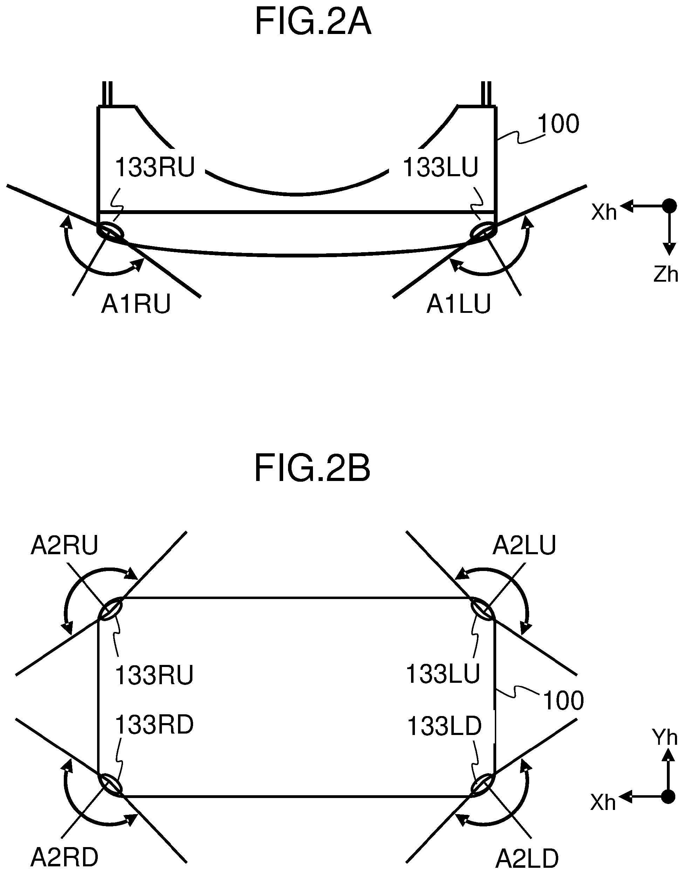

The first embodiment will be described with reference to Figs. 1-9. First, an overview of the information processing apparatus is described with reference to Figs. 1-2. Figures 1A-1C are external views of the information processing apparatus in the installed state. Figures 2A-2C show the imaging range of each external camera installed in the information processing apparatus. Note that, each of Xh, Yh, and Zh are the coordinate axes of the coordinate system based on the information processing apparatus. Xh indicates the left-right direction of the information processing apparatus. Yh indicates the upper-lower direction of the information processing apparatus. Zh indicates the front-back direction of the information processing apparatus.

As shown in Figures 1a through 1c, the information processing apparatus 100 (HMD) is goggle-shaped and is worn on the head of the wearer (user U1), and on the side of the information processing apparatus 100, a touch sensor 122L that the user U1 uses for input operations is provided. Note that, in this example, the right side touch sensor (not shown) is also provided, and touch sensors are provided on both the left and right sides. However, touch sensors may be provided on only one of the left and right sides. Also, the touch sensor may be omitted, when the user U1 performs input operations on the information processing apparatus 100 using the control apparatus described below.

The information processing apparatus 100 is also provided with operation keys (not shown in Figures 1A- 1C) for power, volume, etc. The operation keys can be provided at appropriate locations, for example, on the side of the information processing apparatus 100. For example, in the operation key, it may be used a switch that can switch operations such as power and sound output, by on/off. An adjustment knob may also be provided to adjust volume and other settings.

The inside of the information processing apparatus 100 is equipped with displays (131L, 131R). In this example, the left side display 131L is provided in a position visible to the left eye of user U1, and the right side display 131R is provided in a position visible to the right eye of user U1. The left and right displays (131L and 131R) are configured using non-transmissive displays. Then, in These displays, such as the created VR space images and the real space images captured by the external camera are displayed. Note that, one display may split the display area, and display images for the left eye and the right eye side by side. In this case, the other display may be omitted. Also, in this case, the display may be placed in the center of the left and right directions (Xh axis direction) .

The information processing apparatus 100 has a plurality of external cameras on the front side. In this example, an external camera 133LU is provided at the upper left end part position, an external camera 133LD is provided at the lower left end part position, an external camera 133RU is provided at the upper right end part position, and an external camera 133RD is provided at the lower right end part position. These external cameras (133LU, 133LD, 133RU, 133RD) can capture images of real space around the wearer (user U1) and real objects. The information processing apparatus 100 can also perform distance measuring of objects based on the parallax information of these external cameras. Therefore, the external cameras can be used as a ranging device (distance measuring device). Note that, the information processing apparatus 100 may be equipped with separate photographic and ranging devices, and the photographic and ranging may be performed based on separate devices. For example, an external camera may be used as the capturing device and a distance sensor may be used as the ranging device (distance measuring device).

Audio output units 141L are provided on the side of the information processing apparatus 100. In this example, only the left side audio output unit 141L is shown, but the right side audio output unit (not shown) is also provided, and audio output units are provided on both the left and right sides. Each audio output unit can be configured as a stereo speaker, and the wearer (user U1) can hear the audio output from each audio output unit. The information processing apparatus 100 is also equipped with an audio input unit that inputs the audio of the wearer (user U1). This audio input unit can be configured using a monaural microphone.

The information processing apparatus 100 is also provided with an expansion interface unit. The extension interface unit is an interface used for charging and wired communication. Here, terminal connection ports for connecting terminals may be formed on the sides of the information processing apparatus 100, for example.

Next, the shooting range of each external camera is described. As shown in Figure 2a, in the XhZh plane, the shooting angle of view of external camera 133RU is set to A1RU and the shooting angle of view of external camera 133LU is set to A1LU. Although not shown in the figure, in the XhZh plane, the shooting angle of view of external camera 133RD is set to A1RD and the shooting angle of view of external camera 133LD is set to A1LD.

Also, as shown in Figure 2B, in the XhYh plane, the shooting angle of view of external camera 133RU is set to A2RU and the shooting angle of view of external camera 133LU is set to A2LU. The shooting angle of view of external camera 133RD is set to A2RD, and the shooting angle of view of external camera 133LD is set to A2LD.

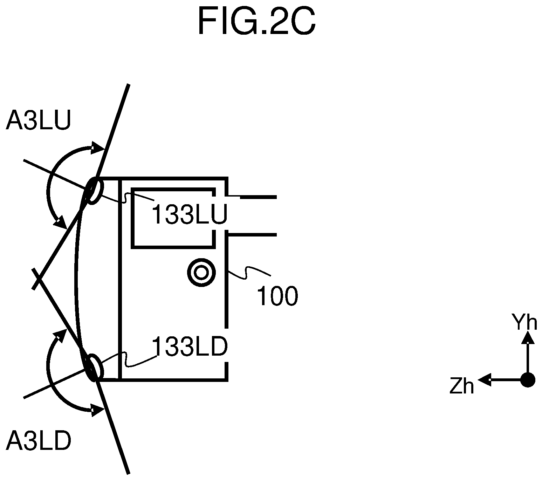

Also, as shown in Figure 2c, in the YhZh plane, the shooting angle of view of external camera 133LU is set to A3LU, and the shooting angle of view of external camera 133LD is set to A3LD. Although not shown in the figure, in the YhZh plane, the shooting angle of view of external camera 133RU is set to A3RU and the shooting angle of view of external camera 133RD is set to A3RD.

Then, by performing stereo shooting by external camera 133LU and external camera 133RU, distance measurement in the Yh-axis direction (upper-lower direction) becomes possible. Similarly, by performing stereo shooting by external camera 133LD and external camera 133RD, distance measurement in the Yh-axis direction (upper-lower direction) becomes possible.

Also, by performing stereo imaging by any combination of external cameras (133LU, 133LD, 133RU, 133RD), distance measurement in the Zh-axis direction (forward) becomes possible.

Also, by performing stereo shooting by external camera 133LU and external camera 133LD, distance measurement in the Xh-axis direction (left-right direction) becomes possible. By performing stereo shooting by external camera 133RU and external camera 133RD, distance measurement in the Xh-axis direction (left/right direction) becomes possible.

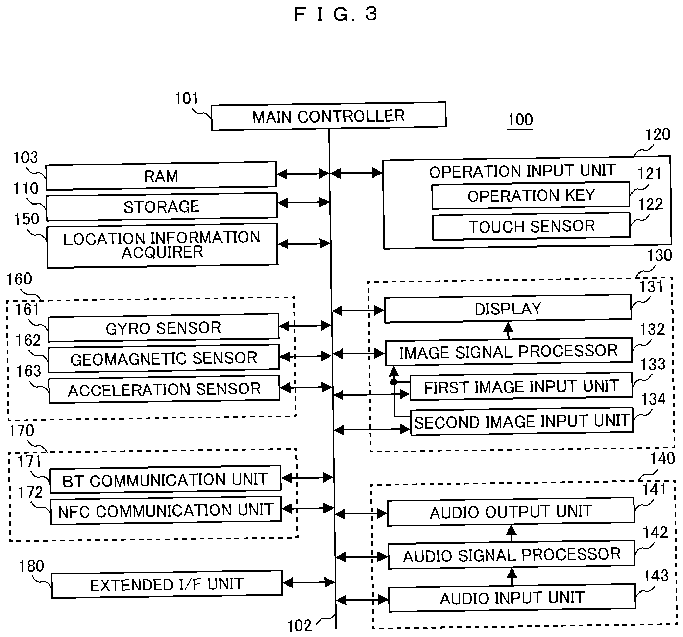

Next, with reference to Figure 3, an example of the hardware configuration of the information processing apparatus is described. Information processing apparatus 100 is configured to main controller 101 (processor), RAM 103, storage110, operation input unit 120, image processor 130, audio processor 140, location information acquirer 150, sensor unit 160, communication unit 170, and extended I/F unit 180 (extended interface unit). These are connected via bus 102, which is the transmission and reception path for exchanging respective data and commands. The information processing apparatus 100 is also configured to battery (not shown) that serves as the power source.

The main controller 101 functions as the main processor of the information processing apparatus 100. The main controller 101 can be configured using, for example, a CPU (Central Processing Unit), but it may also be configured using other semiconductor devices. Note that, the main controller 101 may be configured as an MCU (Micro Controller Unit).

RAM 103 is the main memory used by the main controller 101 during data processing. Storage 110 stores data such as operating programs and can be configured using an appropriate auxiliary storage apparatus. Storage 110 may be configured, for example, using nonvolatile storage apparatus such as Flash ROM (FlashROM), EEPROM (Electrically Erasable Programmable Read-Only Memory), SSD (Solid State Drive), HDD (Hard Disk Drive). By using RAM 103 and storage 110, a memory unit for storing data is configured.

The operation input unit 120 is a user operation interface, and is configured to, as an example, operation key 121 and touch sensor 122. The operation key 121 is a key used for user operation, and can be configured to include, as an example, a power key used as a power switch and a volume key for volume operation. The touch sensor 122 is used to input the wearer's operation. For example, appropriate information may be output to display 131, and the wearer (user) may perform input corresponding the information, via touch sensor 122. However, as mentioned above, touch sensor 122 may be omitted, when input operations are performed with the control apparatus described below.

The image processor 130 is used for video processing and is configured to, as an example, a display 131, an image signal processor 132, a first image input unit 133, and a second image input unit 134. The display 131 is used to present appropriate information, and in this embodiment, is configured with a non-transmissive display. Image signal processor 132 is an image (video) signal processor and has the function of processing video signals. First image input unit 133 comprises an image sensor that converts image information into electrical signals, and in first image input unit 133, data acquired by external cameras (133LU, 133LD, 133RU, 133RD) that capture images around the wearer (user) is inputted. The second image input unit 134 comprises an image sensor that converts image information into electrical signals, and in second image input unit 134, data acquired by an internal camera (not shown) that detects the wearer's (user's) line of sight is inputted.

The audio processor 140 is used for audio processing, and is configured to, as an example, an audio output unit 141, an audio signal processor 142, and an audio input unit 143. As described above, audio output unit 141 outputs audio and is configured using a speaker. Audio signal processor 142 is an audio signal processor and has the function of processing audio signals. Audio input unit 143 is used for audio input and is configured using an appropriate microphone.

The location information acquirer 150 can be configured, for example, using a GPS receiver to acquire location information of the information processing apparatus 100. However, the information processing apparatus 100 may acquire location information by other appropriate methods. For example, by the main controller 101 extracts a feature point in space by analyzing the surrounding images acquired by the first image input unit 133, and acquires relative position information based on this feature point, the information processing apparatus 100 may acquire position information. Thus, if the information processing apparatus 100 acquires location information without the location information acquirer 150, the location information acquirer 150 may be omitted.

The sensor unit 160 can be configured to a gyro sensor 161, a geomagnetic sensor 162, and an acceleration sensor 163 as examples, and can be used to grasp data such as the state of the wearer (user) and the orientation of the information processing apparatus 100. However, the sensors listed here are merely examples, and as long as the specified processing can be performed, the listed sensors may be omitted as appropriate, or other types of sensors may be included. The information processing apparatus 100, for example, can be equipped with a distance sensor capable of detecting the distance to an object, and this sensor may be used to grasp such as position of surrounding objects, size of surrounding objects.

The communication unit 170 is configured as an interface for appropriate communication, for example, is configured to BT communication unit 171 and NFC communication unit 172. BT communication unit 171 is an interface used for near field communication by Bluetooth (registered trademark). NFC communication unit 172 is an interface used for near field communication by NFC (Near Field Communication). Note that, the communication unit 170 may be configured to an interface used for other types of communication. The communication unit 170 may, for example, be configured to an interface for mobile communication, and communicate with other information terminals (e.g., mobile devices and wearable devices as appropriate) by using this interface. Also, the communication unit 170, for example, may be configured to an interface that performs wireless LAN communication.

The extended I/F unit 180 is used to extend the functions of the information processing apparatus 100. The extended I/F unit 180 may be configured to an interface used for charging, and an interface used for wired communication, as described above. Also, the extended I/F unit 180 may be configured to an interface for connecting an external storage apparatus (e.g., USB flash drive). The information processing apparatus 100 may then input and output data to and from the external storage apparatus via this interface.

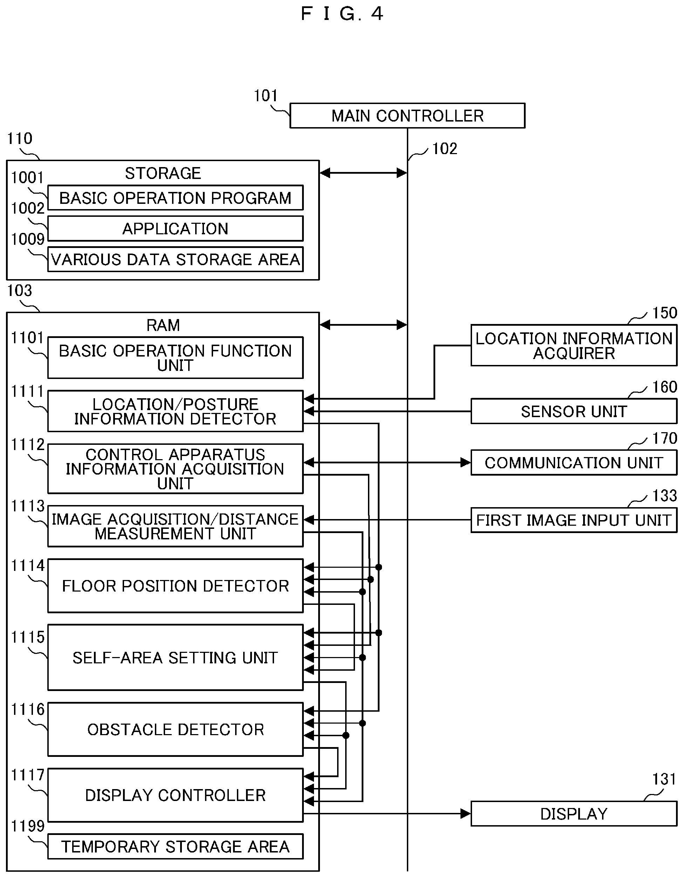

Next, the functions of information processing apparatus 100 will be explained with reference to Figure 4. As shown in Figure 4, storage 110 stores basic operation program 1001, which is a basic program such as an OS, and application 1002 for executing predetermined functions. The storage 110 also includes a various data storage area 1009, the various data storage area 1009 stores various operation settings and information (in when experiencing a VR space, etc., video to be played, still images to be displayed, audio data to be output, etc.). By programs and applications stored in storage 110 are deployed (loaded) into RAM 103 by the main controller 101, and the main controller 101 executes the programs and applications deployed in RAM 103, the predetermined functions related to this embodiment are realized. Note that, the application 102 stored in the storage 110 may include, for example, an appropriate application, such as plays an appropriate video, an application that plays a VR video, and an application that displays images. The main controller 101 may then deploy this application in RAM 103 to realize the predetermined functions.

The main controller 101 deploys the programs, etc. stored in the storage 110 to RAM 103 and, as an example, realizes each of the functions (1101, 1111 to 1117) described below. However, the description here is only an example, and main controller 101 may also realize basic operations and applications other than these.

The basic operation function unit 1101 controls the basic operation of the information processing apparatus 100.

The location/posture information detector 1111 acquires location and posture information (such as direction and tilt) of the information processing apparatus 100 in real space. Here, the main controller 101 may acquire location information based on the location information signal acquired by the location information acquirer 150. Note that, the main controller 101, based on the image acquired by the first image input unit 133, may extract feature points in real space, estimate relative positions from the extracted feature points, and acquire location information. The main controller 101, based on data acquired by the sensor unit 160, may acquire posture information. The main controller 101 may, for example, acquire the orientation (direction) of the information processing apparatus 100 based on data from the geomagnetic sensor 162. The main controller 101 may, for example, acquire the tilt of the information processing apparatus 100 based on data from the gyro sensor 161 and acceleration sensor 163.

The control apparatus information acquisition unit 1112 transmits and receives data to and from the control apparatus described below via the communication unit 170 to acquire control apparatus information. Here, the control apparatus information to be acquired may include input information by the user to the control apparatus, posture information of the control apparatus, etc.

The image acquisition/distance measurement unit 1113 acquires image information around the information processing apparatus 100 via the first image input unit 133. The image acquisition/distance measurement unit 1113 also calculates distance information to the photographed object based on the acquired image information. Note that, when a distance measuring device such as a distance sensor is used, the image acquisition/distance measurement unit 1113 may calculate the distance information to the object based on the information acquired by the distance measuring device. Main controller 101 may estimate the direction of the captured object based on the position of the object in the image sensor and the angle of view of the external camera taking the image.

The floor position detector 1114 detects the floor position of the space (room, etc.) where the user wearing the information processing apparatus 100 is located. The floor position detector 1114, for example, detects floor position information, based on such as the position and posture information of the information processing apparatus 100 detected by the location/posture information detector 1111, the posture information of the control apparatus acquired by the control apparatus information acquisition unit 1112, and the distance information acquired by the image acquisition/distance measurement unit 1113.

The self-area setting unit 1115 sets the self-area for the wearer (user) of the information processing apparatus 100 to safely experience VR. In other words, the wearer of the information processing apparatus 100 experiences the VR space, etc. in the real space. During the experience, the wearer may move in various directions depending on the output contents of the information processing apparatus 100. However, there may be, such as various objects that become obstacles, in the real space where the wearer is. Therefore, it is necessary for the wearer to avoid these objects when he/she performs activities such as moving or moving his/her hands during the experience. Therefore, the wearer should set the area where he/she can safely move and perform activities without coming into contact with these objects. Note that, for example, during a VR experience, the VR space image is displayed, and these objects cannot be recognized.

The self-area setting unit 1115 sets the self-area of the user wearing the information processing apparatus 100. The self-area setting unit 1115 sets the self-area of the user wearing the information processing apparatus 100, for example, based on such as location and posture information of the information processing apparatus 100 detected by the location/posture information detector 1111, posture information of the control apparatus acquired by the control apparatus information acquisition unit 1112, and the distance information acquired by the image acquisition/distance measurement unit 1113.

The obstacle detector 1116 analyzes image information around the information processing apparatus 100 taken by an external camera and acquired via the first image input unit 133, detects objects/persons, etc. around the information processing apparatus 100, and calculates distance information to the detected object/person. Also, the obstacle detector 1116 performs warning display when the detected object/person is within the self-area set by the self-area setting unit 1115. Note that, the obstacle detector 1116 may use the data output by the image acquisition/distance measurement unit 1113 for processing.

The display controller 1117 controls the display of information on the display 131. Display controller 1117, for example, controls the display of images generated by the application. Also, the display controller 1117 controls the video-through display of image information around the information processing apparatus 100 captured and acquired by the first image input unit 133 (i.e., external cameras 133LU/133RU/133LD/133RD). Also, the display controller 1117 controls display on the display 131 the self-area set by the self-area setting unit 1115 and the warning display generated by the obstacle detector 1116. Note that, the display controller 1117 may display in an appropriate manner, relate to display of the self-area and warning display. Display controller 1117 may, for example, superimpose and display information about the self-area and warning on the currently displayed image.

In addition, a temporary storage area 1199 is located in RAM 103. This temporary storage area 1199 is, for example, a temporary storage area for various information created or acquired by the application.

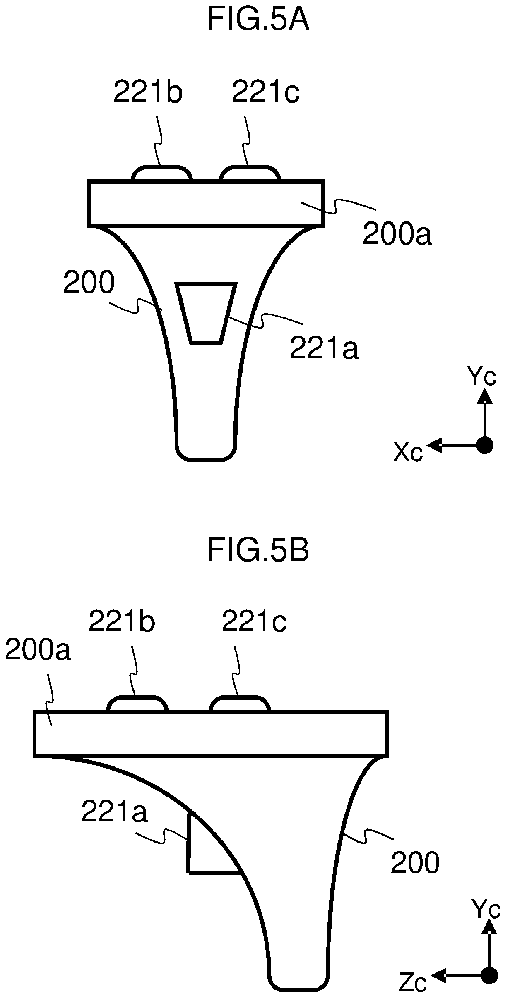

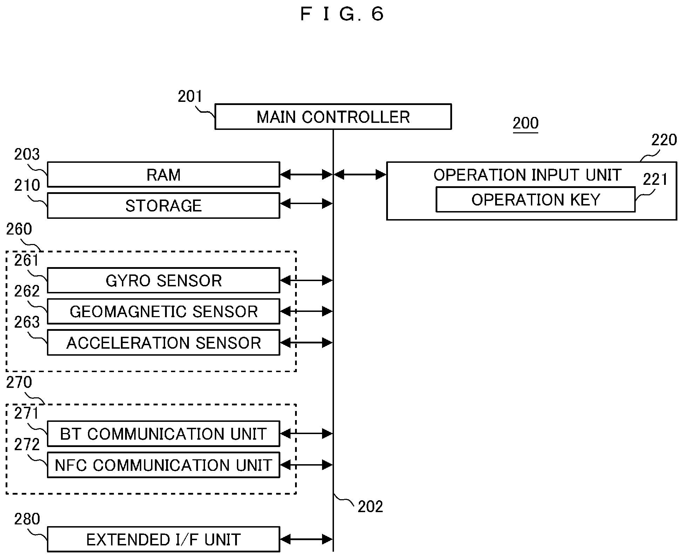

Next, with reference to Figures 5a, 5b, and 6, an example configuration of a control apparatus will be described. Control apparatus 200 can communicate with information processing apparatus 100, and the wearer (user) can use control apparatus 200 as a controller. The control apparatus 200 may also be used in a self-area setting, as described below. Note that, the control apparatus 200 can be used by the wearer while being held in his/her hand. one control apparatus may be provided, and the wearer may hold it in either of the left or right hand and use it. On the other hand, two control apparatuses may be provided, and the wearer may hold and use them in each hand.

As shown in Figures 5a and 5b, the control apparatus 200 is shaped to be graspable by the user and has an end part 200a protruding in the front-back direction. Also, the control apparatus 200 has a plurality of operation keys (221a to 221c), is configured to a first operation key 221a, a second operation key 221b, and a third operation key 221c. Also, the control apparatus 200 is configured to an interface (not shown in Figures 5a and 5b) to connect the charging terminal. Note that, in Figures 5A and 5B, Xc, Yc, and Zc are a coordinate system based on the control apparatus 200, Xc indicates the left-right direction of the control apparatus 200, Yc indicates the upper-lower direction of the control apparatus 200, and Zc indicates the front-back direction of the control apparatus 200.

Next, an example of the hardware configuration of control apparatus 200 is described. As shown in Figure 6, control apparatus 200 is configured to main controller 201, RAM 203, storage 210, operation input unit 220, sensor unit 260, communication unit 270, and extended I/F unit 280 (extended interface unit). These are connected via bus 202, which is a transmission and reception path for exchanging respective data and commands. The control apparatus 200 is also configured to a battery (not shown) that serves as the power source.

The main controller 201 functions as the main processor of the control apparatus 200. Main controller 201 may be configured using, for example, a CPU, but may also be configured using other semiconductor devices. Note that, the main controller 201 may be configured as an MCU.

RAM 203 is the main memory used by the main controller 201 during data processing. Storage 210 stores data such as operating programs and can be configured using an appropriate auxiliary storage apparatus. Storage 210 may be configured, for example, using nonvolatile storage apparatus such as Flash ROM, EEPROM, SSD, HDD.

The operation input unit 220 is a user operation interface, and is configured to, as an example, operation key 221. The operation key 221 is a key used for user operation, and can be configured to include, as an example, a first operation key 221a, a second operation key 221b, and a third operation key 221c, described above.

The sensor unit 260 can be configured to a gyro sensor 261, a geomagnetic sensor 262, and an acceleration sensor 263 as examples, and can be used to grasp data such as the posture and orientation of the control apparatus 200. However, the sensors listed here are merely examples, and other types of sensors may be included.

The communication unit 270 is configured as an interface for appropriate communication, for example, is configured to BT communication unit 271 and NFC communication unit 272. BT communication unit 271 is an interface used for near field communication by Bluetooth (registered trademark). NFC communication unit 272 is an interface used for near field communication by NFC (Near Field Communication).

The extended I/F unit 280 is used to extend the functions of the control apparatus 200. The extended I/F unit 280 may be configured to an interface used for charging, and an interface used for wired communication.

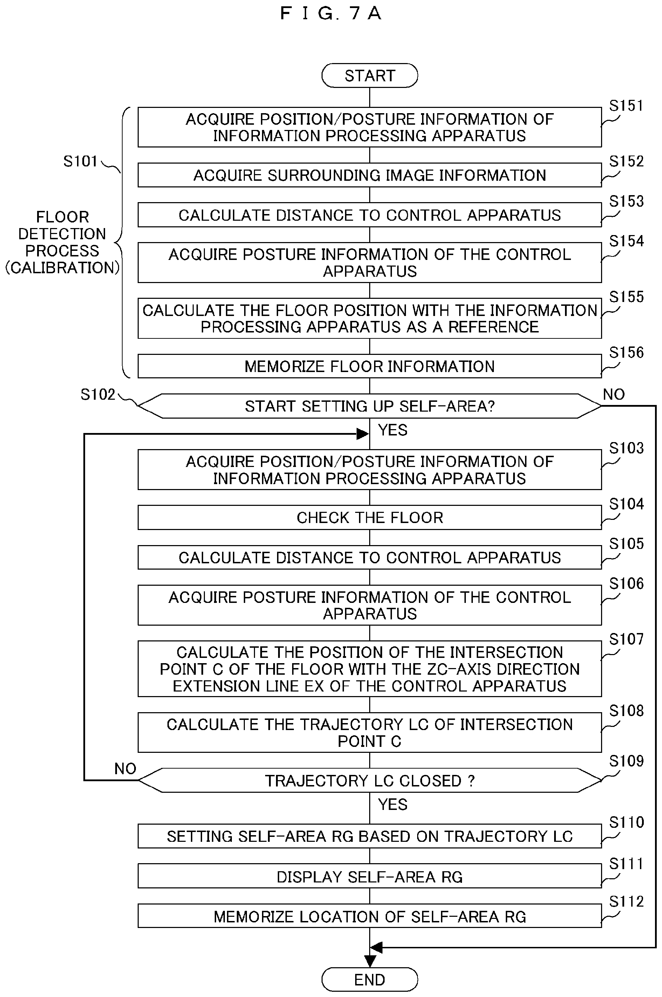

Next, an example of the self-area initialization process is described with reference to Figures 7a-7d. As shown in Figure 7A, when this process is started, the main controller 101 of the information processing apparatus 100, first, executes the floor detection process S101. The floor detection process S101 relates to calibration.

First, the user places the control apparatus 200 on the floor and tilts the head (tilts the neck) to capture the control apparatus 200 with an external camera.

Then, the main controller 101 of the information processing apparatus 100 acquires information on the location and posture of the information processing apparatus 100 by executing the location/posture information detector 1111 (S151). Also, the main controller 101 acquires image information of the surrounding area taken by the external camera from the first image acquisition unit 133 by executing the image acquisition/distance measurement unit 1113 (S152), and further, calculates the distance to the control apparatus 200 placed on the floor by using the acquired image information (S153).

Also, the main controller 101 acquires the posture information of the control apparatus 200 acquired by the control apparatus 200 using the sensor unit 260, by executing the control apparatus information acquisition unit 1112 (S154).

The main controller 101 executes the floor position detector 1114 and performs processing using the acquired position and posture information of the information processing apparatus 100, the calculated distance to the control apparatus 200, and the acquired posture information of the control apparatus 200. Based on this processing, the main controller 101 calculates the floor position with respect to the information processing apparatus 100 (S155). The main controller 101 then stores the calculated floor information in the storage 110 (S156).

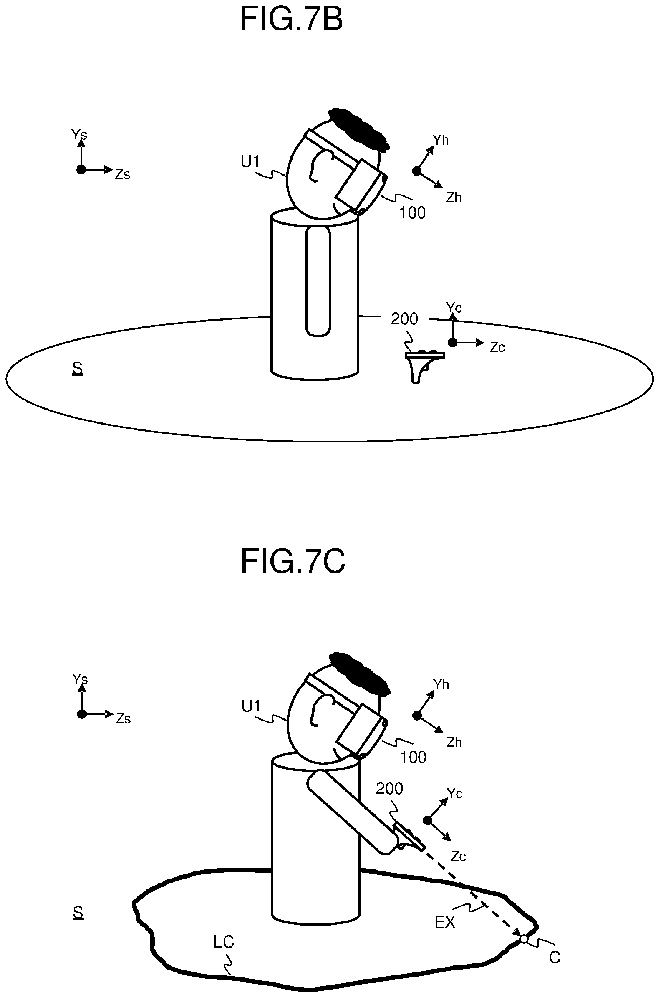

Here, The floor detection process S101 will be explained in more detail with reference to Figure 7B. Note that, in Figure 7B, Xs, Ys, and Zs are the coordinate axes of the coordinate system in real space S, Xs indicates the latitude direction in real space, Ys indicates the gravity direction in real space, and Zs indicates the longitude direction in real space.

User U1 places the control apparatus 200 on the floor, so that the Ys axis of the real space S and the Yc axis of the control apparatus are aligned, in a room etc., where it detects floor. Then, user U1 tilts his/her head (tilts his/her neck) and takes a picture of the control apparatus 200 with the external camera of the information processing apparatus 100.
(1) The main controller 101 obtains the elevation angle with respect to the XsZs plane of the real space S of the pointing direction (Zh axis direction) of the information processing apparatus 100, from the posture information of the information processing apparatus 100 obtained by the location/posture information detector 1111. In other words, the angle between the Zh direction of the information processing apparatus 100 and the XsZs plane of the real space S is obtained. Also, (2) the main controller 101 analyzes the image information captured by the external camera and acquired by the image acquisition/distance measurement unit 1113. The main controller 101, by this analysis, obtains elevation angle of position direction of the control apparatus 200 with respect to the XhZh plane based on the information processing apparatus 100, from imaging position of the control apparatus 200 in image sensor comprising first image input unit 133 and the shooting angle of view of first image input unit 133. In other words, the angle between the XhZh plane of the information processing apparatus 100 and the position direction of the control apparatus 200 with respect to the position of the information processing apparatus 100 is obtained. Then, (3) main controller 101 calculates the angle between the straight line connecting information processing apparatus 100 and control apparatus 200 and the vertical direction of real space S (Ys-axis direction), based on the results of each angle. (3) is explained in detail, the main controller 101, by using the elevation angle obtained in (1) above, obtains the angle in the position direction of the control apparatus 200 relative to the XhZh plane in the real space, from the angle in the position direction of the control apparatus 200 relative to the XhZh plane obtained in (2) above. Then, the main controller, by using this angle with respect to the XsZs plane in real space, obtains angle between the straight line connecting the information processing apparatus and the control apparatus and the vertical direction of the real space S.

Also, (4) the main controller 101 calculates the location information of the control apparatus 200 in the real space S. Here, the main controller 101 calculates the location information of the control apparatus 200, from, the location information of the information processing apparatus 100 in the real space S obtained by the location/posture information detector 1111, the distance information between the information processing apparatus 100 and the control apparatus 200 calculated by the image acquisition/distance measurement unit 1113, and the angle calculated in (3).

Furthermore, (5) main controller 101 corrects the position information of control apparatus 200 calculated in (4) above with the information on the size of control apparatus 200. Then, the main controller 101 calculates the location information of floor in the real space S, from, the distance information from the information processing apparatus 100 to the control apparatus 200 based on the corrected position information of the control apparatus 200, and the angle calculated in (3). The main controller 101 calculates the information in the Ys-axis direction that mainly indicates the height (i.e., the length from the information processing apparatus 100 to the floor), as the position information of the floor. In the floor detection process, main controller 101 may calculate the height (information in the Ys-axis direction) using the trigonometric ratio, as the hypotenuse that the distance from the information processing apparatus 100 to the control apparatus 200.

Note that, the main controller 101 acquires the posture information of the control apparatus 200 in the real space and determines whether the coordinate system of the real space and the coordinate system of the control apparatus 200 match. Then, if there is a difference in these coordinate systems (for example, if there is a difference in the Ys-axis direction and the Yc-axis direction), the main controller 101 outputs a warning and prompts the user to reposition the control apparatus 200, since it may not be processed correctly.

Also, the floor detection process S101 may be performed by the information processing apparatus 100 alone, without using the control apparatus 200. In this case, user U1 sets the information processing apparatus 100 to the floor detection mode (calibration mode) by operation instructions. Furthermore, the information processing apparatus 100 operating in the floor detection mode (calibration mode) is removed from the head and placed on the floor in a predetermined posture. In this state, if the main controller 101 of the information processing apparatus 100 corrects the posture information (mainly the position on the Ys axis in the real space S) of the information processing apparatus 100 acquired from the location/posture information detector 1111, with the information about the size of the information processing apparatus 100, the position information of the floor can be calculated.

Returning to the flowchart in Fig. 7a, an example of processing after the floor detection process is described. User U1 holds the control apparatus 200 in his/her hand and performs a start request operation of the self-area setting process. Here, the main controller 101 of the information processing apparatus 100 executes the self-area setting unit 1115 to check whether or not there is a start request operation of the self-area setting process from the user U1 (S102). If there is a start request operation, the process proceeds to S103. On the other hand, if there is no start request operation, the process ends. Note that, the start request operation may be performed using the touch sensor 122 of the information processing apparatus 100. On the other hand, the start request operation may be performed by the user U1 operating the operation input unit 220 of the control apparatus 200.

The main controller 101 acquires location and posture information of the information processing apparatus 100 in real space from the location information acquirer 150 and sensor unit 160 by executing the location/posture information detector 1111 (S103).

The main controller 101 executes the floor position detector 1114 and confirms the position information of the floor, based on the information about the position of the floor with the information processing apparatus 100 as a position reference read from the storage 110, and the position information of the information processing apparatus 100 obtained in the process of S103 (S104).

The main controller 101, by executing the image acquisition/distance measurement unit 1113, analyzes the image information acquired by the first image input unit 133 and calculates the distance information from the information processing apparatus 100 to the control apparatus 200 (S105).

The main controller 101 acquires posture information of the control apparatus in real space, via the communication unit 170, by executing the control apparatus information acquisition section 1112 (S106).

The main controller 101 calculates the position information of the intersection point C between the extension line EX extending in the Zc-axis direction from the control apparatus 200 and the floor, by executing the self-area setting unit 1115. Main controller 101 may, for example, calculates the position information of the intersection point C between the extension line EX extending in the Zc-axis direction and the floor, with reference to the end part 200a, which is the tip of the control apparatus 200 in the Z axis direction. Here, the main controller 101 may, for example, calculates the position information of the intersection point, based on the position and posture information of the information processing apparatus 100 obtained, the position information of the floor confirmed, the calculated distance from the information processing apparatus 100 to the control apparatus 200, and the posture information of the control apparatus 200 obtained (S107).

When user U1 moves the control apparatus 200 in real space, the above process of S103 to S107 is repeated, and the main controller 101 executes the self-area setting unit 1115 to obtain a trajectory LC consisting of a collection of calculated intersection points C (S108).

Then, the main controller 101 executes the self-area setting unit 1115 and checks whether or not the trajectory LC is closed state surrounding the user U1 (S109). If the locus LC is closed state surrounding the user U1, the process proceeds to S110. Otherwise, the process returns to S103, and the main controller 101 repeats the process from S103 to S108.

Next, main controller 101 executes self-area setting unit 1115 to set the self-area RG based on the trajectory LC (S110). Then, the main controller 101 executes the display controller 1117 to display the self-area RG set in the process of S110 on the display 131 (S111). Here, user U1 can confirm the displayed self-region RG.

Then, the main controller 101 executes the self-area setting unit 1115, and stores in the storage 110, information on the area shape, position information of the information processing apparatus 100 obtained in the processing of S103 as the position reference, regarding the self-area RG set in process S110 (S112).

Here, the process of generating the trajectory will now be explained in more detail with reference to Figure 7C. Note that, in Figure 7C, Xs, Ys, and Zs are the coordinate axes of the coordinate system in real space as in Figure 7B.

User U1 holds the control apparatus 200 in his/her hand and points the end part 200a of the control apparatus 200 at the floor. User U1 then draws the trajectory he/she wants to generate on the surrounding floor. When user U1 operates the control apparatus 200 in this manner, the main controller 101 performs the process described below.
(1) The main controller 101 obtains the elevation angle with respect to the XsZs plane of the real space S of the pointing direction (Zh axis direction) of the information processing apparatus 100, from the posture information of the information processing apparatus 100 obtained by the location/posture information detector 1111. That is, the angle between the Zh direction of the information processing apparatus 100 and the XsZs plane of the real space S is obtained. Also, (2) the main controller 101 analyzes the image information captured by the external camera and acquired by the image acquisition/distance measurement unit 1113. The main controller 101, by this analysis, obtains elevation depression angle of position direction of the control apparatus 200 with respect to the XhZh plane based on the information processing apparatus 100, from imaging position of the control apparatus 200 in image sensor comprising first image input unit 133 and the shooting angle of view of first image input unit 133. In other words, the angle between the XhZh plane of the information processing apparatus 100 and the position direction of the control apparatus 200 with respect to the position of the information processing apparatus 100 is obtained. Then, (3) main controller 101 calculates the angle between the straight line connecting information processing apparatus 100 and control apparatus 200 and the vertical direction of real space S (Ys-axis direction), based on the results of each angle. (3) is explained in detail, the main controller 101, by using the elevation angle obtained in (1) above, obtains the angle in the position direction of the control apparatus 200 relative to the XhZh plane in the real space, from the angle in the position direction of the control apparatus 200 relative to the XhZh plane obtained in (2) above. Then, the main controller, by using this angle with respect to the XsZs plane in real space, obtains angle between the straight line connecting the information processing apparatus 100 and the control apparatus 200 and the vertical direction of the real space S.

Also, (4) the main controller 101 calculates the location information of the control apparatus 200 in the real space S. The main controller 101 calculates the location information of the control apparatus 200, from, the location information of the information processing apparatus 100 in the real space S obtained by the location/posture information detector 1111, the distance information between the information processing apparatus 100 and the control apparatus 200 calculated by the image acquisition/distance measurement unit 1113, and the angle calculated in (3).

Furthermore, (5) main controller 101 calculates the trajectory information of the extension line EX extending from the tip of control apparatus 200 to the Zc axis direction, from, the position information of control apparatus 200 calculated above (4), and the posture information of control apparatus 200 obtained by the control apparatus information acquisition unit 1112. Also, (6) main controller 101, by using location information of the information processing apparatus 100 in real space S obtained by location/posture information detector 1111, calculates position information of floor in real space S. The main controller 101 can calculate information in the Ys-axis direction that mainly indicates height (i.e., information on the length from the information processing apparatus 100 to the floor), as the location information of the floor. Note that, the main controller 101 may use the information about the position of the floor, the information processing apparatus 100 as a position reference stored in the storage 110.

Then, (7) the main controller 101 calculates the position information of the intersection point C between the extension line EX extending in the Zc-axis direction from the tip of control apparatus 200, from, the trajectory information of the extension line EX, and the location information of floor obtained above (6) (mainly, height information in the Ys-axis direction).

User U1 operates control apparatus 200 and moves the tip of the control apparatus 200 toward the surrounding floor. The information processing apparatus 100 then generates trajectory information of an extension line EX around the user U1 and generates trajectory LC consisting of a collection of intersection points C.

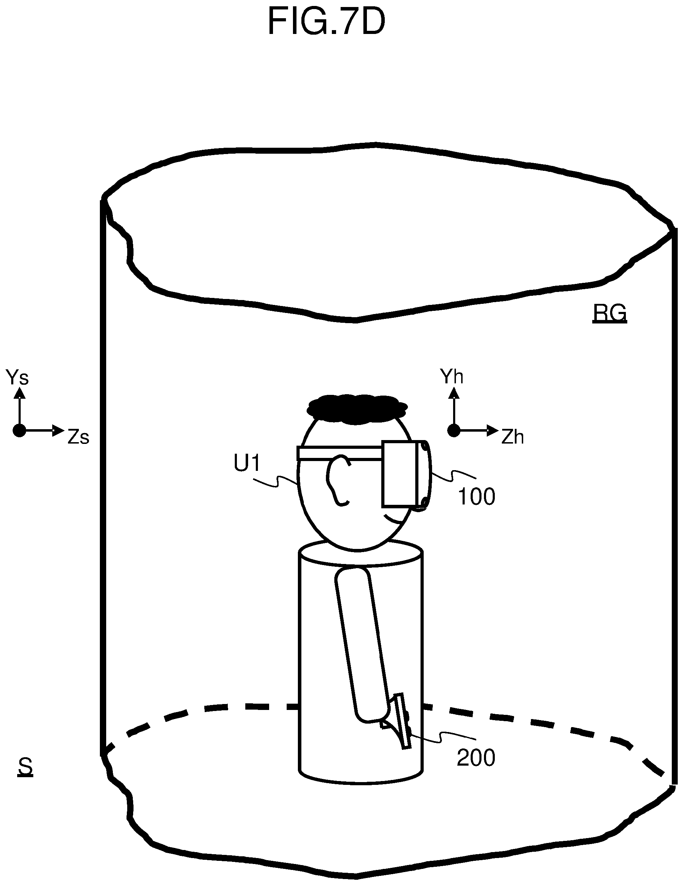

Next, with reference to Figure 7D, an example of a self-area based on the generated trajectory is described. As shown in Figure 7D, as an example, the main controller 101 generates a self-area RG of the 3D space, which become a shape a trajectory surrounding the user U1 is extended in the vertical direction (Ys axis direction) of the real space S. Here, the height of the self-area RG can be higher than the height of the tip of the hand of the user U1 when he/she raises his/her arm, as an example. It can also be a shape that extends to the ceiling in the vertical direction (Ys axis direction) of the real space S.

Also, in addition to the method of generating a self-area based on the trajectory LC configured on the floor using the control apparatus 200 described in the above procedure, a self-area may also be generated by the following method. For example, if there is a start request operation of the self-area setting process in process S102, a circle of a predetermined radius centered at the position of user U1 (position of the information processing apparatus 100) is temporarily set on the floor instead of the above trajectory LC, and if necessary, the control apparatus 200 is used to deform the circle on the floor. After this, it may be generated a self-area of the 3D space by extending this deformed circle in the vertical direction (Ys axis direction) of the real space S. Note that, the figure temporarily set on the floor instead of the trajectory LC is not limited to a circle, but can be a rectangle, pentagon, hexagon, etc.

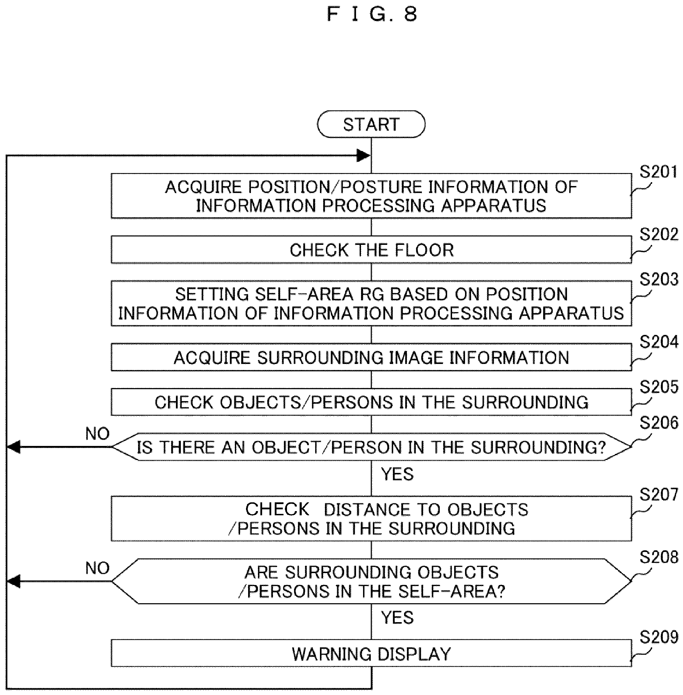

Next, an example of the warning display process is described with reference to Figure 8. As shown in Fig. 8, the main controller 101 of the information processing apparatus 100 acquires location and posture information of the information processing apparatus 100 in real space S, from the location information acquirer 150 and sensor unit 160, by executing the location/posture information detector 1111(S201).

The main controller 101 executes the floor position detector 1114 and confirms the position information of the floor, based on the information about the position of the floor with the information processing apparatus 100 as a position reference read from the storage 110, and the position information of the information processing apparatus 100 obtained in the process of S201 (S202).

The main controller 101 executes the self-area setting unit 1115 and analyzes the image information acquired by the first image input unit 133. The main controller 101, by this analysis, checks the environment in which the self-area RG can be set. Then, the main controller 101 sets the self-area based on the acquired location information of the information processing apparatus 100 and the location information of the floor confirmed in S202 (S203).

After setting the self-area in S203, the main controller 101 executes the image acquisition/distance measurement unit 1113 to acquire images around the information processing apparatus 100 from the first image input unit 133 (S204).

The main controller 101 analyzes the images around the information processing apparatus 100 obtained in the process of S204 and checks whether any object or person other than the user is in the image information (S205). Note that, the main controller 101 may check not only whether there are objects/persons in front of, behind, left and right of the user U1, but also lower the user U1. The main controller 101 may also check whether the height of the floor is significantly different from the floor location information confirmed in the S202 process, for example, whether there are stairs in the image information.

In S206, if the main controller 101 determines that there is an object/person in the vicinity, the process proceeds to S207. On the other hand, if the main controller 101 determines that there is no object/person in the vicinity, the process returns to S201.

The main controller 101, by executing the image acquisition/distance measurement unit 1113, analyzes the images around the information processing apparatus 100 acquired in the process of S204, and calculates the distance information to objects or persons other than the user (S207).

The main controller 101 determines whether an object or person other than the user is within the self-area (S208). Here, the main controller 101 determines based on the information on the self-area set in S203 and the distance information to the object or person other than the user calculated in process S207. If an object or person other than the user is within the self-area, the process proceeds to S209. On the other hand, if an object or person other than the user, is not within the self-area, the process returns to S201. Then, the main controller 101 repeats the process from S201 to S207.

The main controller 101 executes the display controller 1117 and displays the warning display generated by the obstacle detector 1116 on the display 131 so that it overlaps the direction in which the object or person was identified (S209). Note that, the warning display may be superimposed and displayed on the image of the running application. Also, the warning display may be performed in an appropriate manner, using text messages, symbols, illustrations, etc. The warning display may also be performed by visualizing the self-area (or the boundaries of the self-area). The main controller 101 may also perform the warning display by superimposing and displaying an image of the acquired object or person.

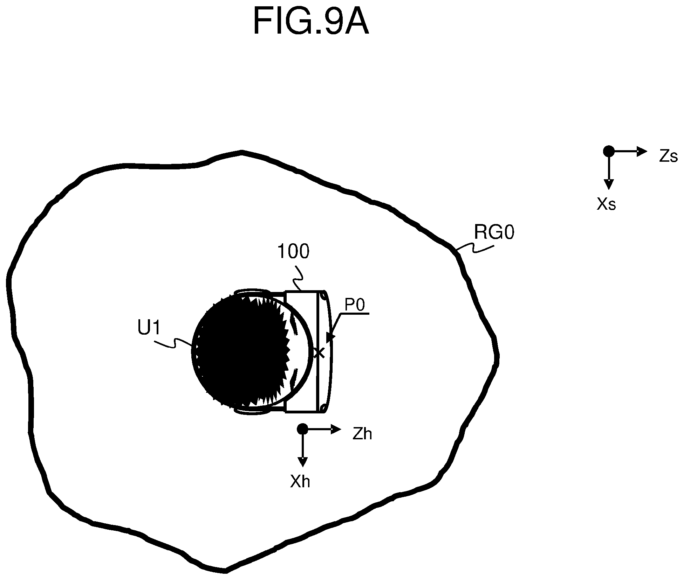

Next, the status of the self-area during user movement is explained with reference to Figures 9A-9C. Figure 9A shows an example of a self-area before user movement. In this example, user U1 is located at position P0 and the self-area RG0 is set.

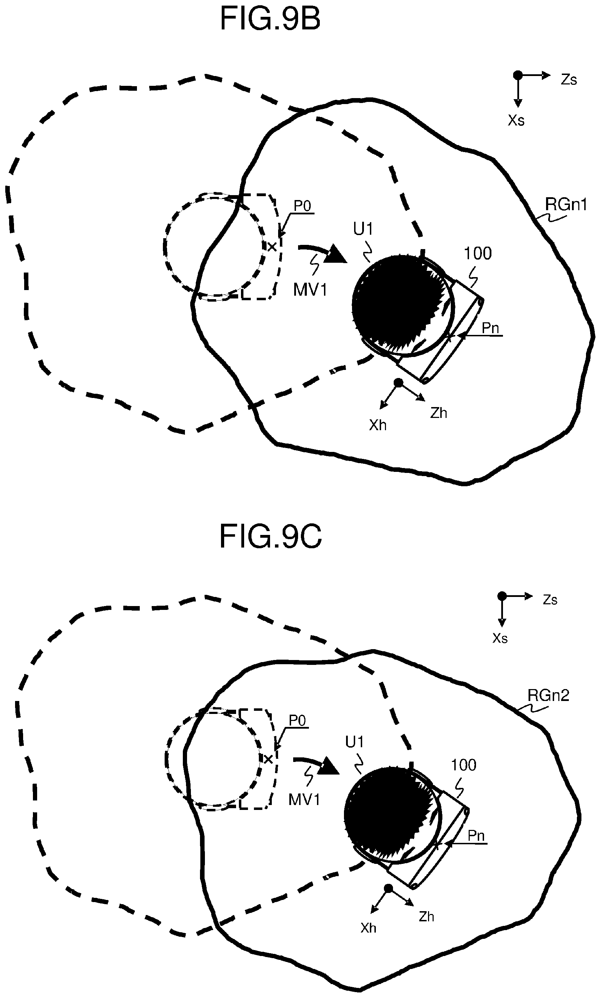

Figure 9B shows the self-area RGn1 in the coordinate system based on the information processing apparatus 100 when the user performs move MV1 from position P0 to position Pn. When user U1 moves from position P0 to position Pn, the self-area RGn1 is set with the position Pn after the move as the position reference. And, the shape of this self-area RGn1 is maintained in the coordinate system (XhZh) based on the information processing apparatus 100, before and after the user U1 moves. Also, Figure 9C shows the case where user U1 performs move MV1 from position P0 to Pn, and shows the self-area RGn2 in the coordinate system in real space S. As in Figure 9B, when user U1 moves from position P0 to position Pn, the self-area RGn2 is set with the position Pn after the move as the position reference. And, the shape of this self-area RGn2 is maintained in the coordinate system in real space S, before and after the user U1 moves.

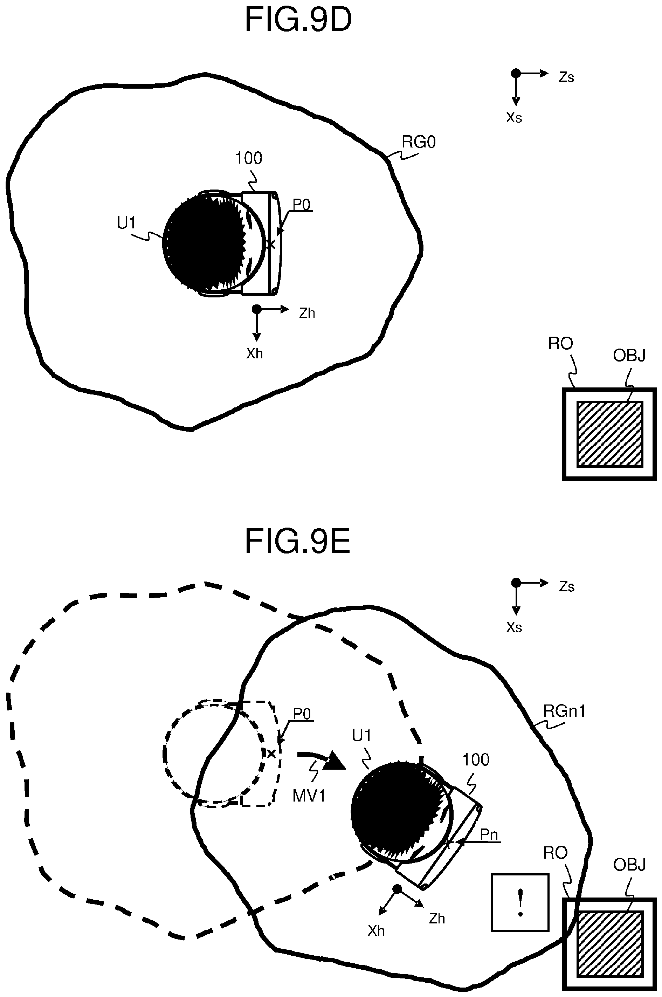

Next, with reference to Figures 9D-9F, examples of processing at the time of warning display will be explained. Figure 9D shows the situation before warning display. In this situation, user U1 is located at position P0 and the self-area RG0 is set. In this case, the obstacle area RO is not within the self-area RG0, so warning display is not performed. Then, as shown in Figure 9E, if at least part of the obstacle area RO enters into the self-area RGn1, which is the self-area at position Pn, by the user U1 has performed move MV1 from position P0 to position Pn, the main controller 101 displays a warning display (exclamation mark) on display 131. Note that, the obstacle area RO is an area that the main controller 101 sets in advance in the vicinity of the obstacle OBJ.

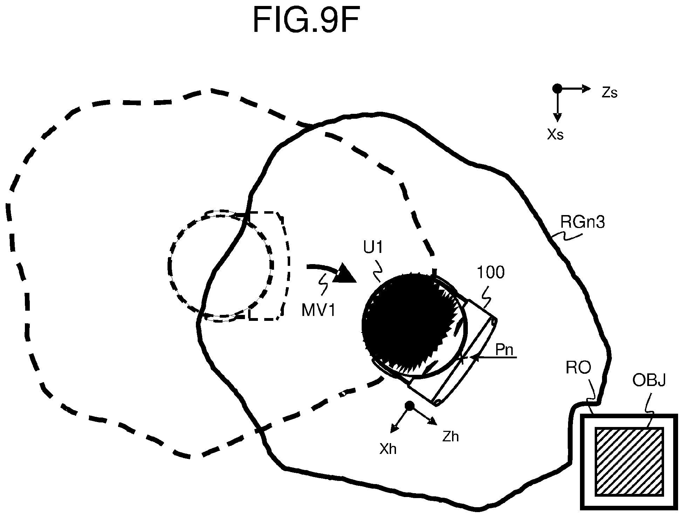

The following process may also be performed. That is, as shown in Figure 9F, when the obstacle area RO enters the self-area due to the user U1 performs move MV1 to position Pn, the main controller 101 updates the self-area RGn3 so that its shape does not overlap with the obstacle area RO. Then, the main controller 101 warns the user U1 by displaying the self-area RGn3 with the updated shape on the display 131.

According to the first embodiment, an information processing apparatus 100 is provided that allows the wearer to more suitably perceive the possibility of contact with objects in the real world, while taking into account the wearer's immersive experience. Also, even if the situation changes as the wearer moves, it can be handled in the same way.

### < Second embodiment >

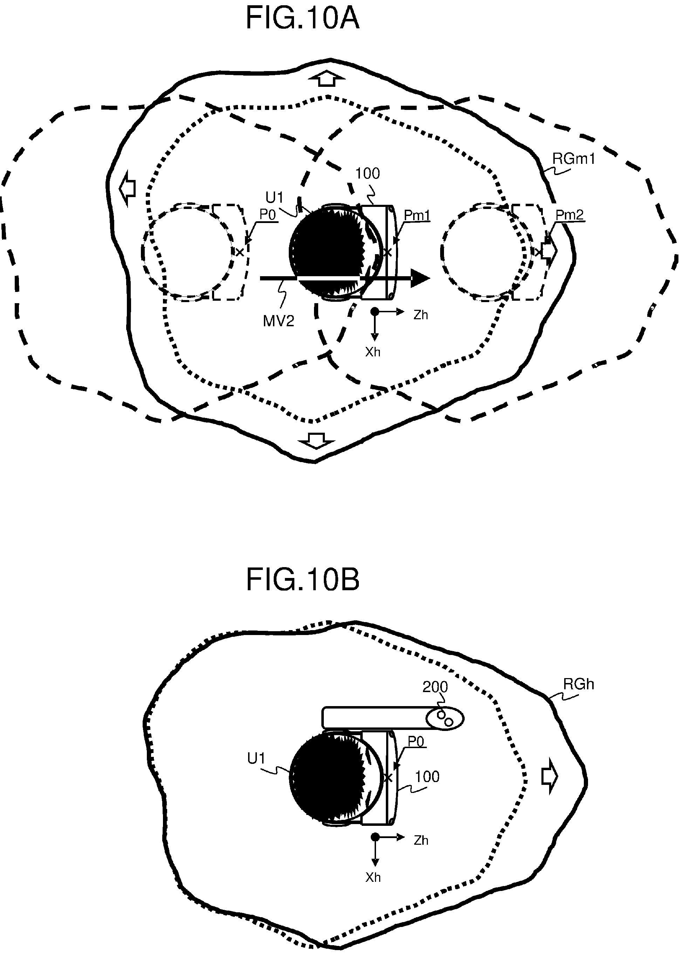

Next, the second embodiment is explained with reference to Figure 10a. In the second embodiment, the main controller 101 performs the process of setting the self-area according to the movement speed. Note that, the same explanations as those already described may be omitted.

As shown in Figure 10a, when user U1 performs move MV2 from position P0 to position Pm2 via position Pm1, a self-area is set at the moving position Pm1 according to the movement speed. Here, the self-area RGm1 can be, as an example, an area that is similar to the initial shape (i.e., the self-area at position P0) and has a shape that is expanded around it according to the movement speed. In other words, main controller 101 may set up a self-area with the front, back, left and right sides of the self-area modified by an equal magnification rate.

On the other hand, the self-area may, as an example, be an area that is not similar to the initial shape (i.e., the self-area at position P0) but has a shape that is expanded around it according to the speed of movement. In other words, the main controller 101 may set a self-area with the front/back and left/right sides of the self-area modified by an appropriate magnification rate. For example, when user U1 moves forward, taking into consideration the viewpoint of gazing more closely at obstacles that exist in front, main controller 101 may set the self-area based on a magnification rate of 2 times forward, 1.5 times left and right, and 1 times backward.

Note that, the main controller 101 can obtain the speed of movement as appropriate. The main controller 101 may, for example, estimate the speed of movement based on the time variation of the location information of the information processing apparatus 100. As explained above, main controller 101 can obtain location information, for example, using the feature points included in location information acquirer 150 or image information.

According to the second embodiment, it is possible to adjust to the shape of the self-area, suitable for the moving conditions of user U1, based on the moving speed of user U1.

### < Third embodiment >

Next, the third embodiment is explained with reference to Figure 10b. In the third embodiment, main controller 101 performs the process of setting the self-area according to the user's posture. Note that, the same explanations as those already described may be omitted.

As shown in Figure 10b, when user U1 stretches the hand (arm) grasping the control apparatus 200 forward at position P0, an expanded self-area RGh is set in the direction (forward) of the stretched hand (arm). Here, the self-area RGh can be, as an example, an area having a shape that is expanded only in the direction of the extended hand (arm) compared to the initial shape. In other words, the main controller 101 may set a self-area RGh that is modified by an appropriate magnification rate with respect to the direction in which the hand (arm) is extended.

Note that, in Figure 10B, the case in which the hand (arm) is extended forward is described, but if user U1 extends the hand (arm) grasping the control apparatus 200 to the side, for example, the main controller 101 may set the self-area with an expanded shape to the side. Also, if user U1, for example, extends the hand (arm) grasping the control apparatus 200 in a forward diagonal direction, the self-area may be set in an expanded shape in the forward diagonal direction.

The main controller 101 may acquire appropriate information and perform processing. Main controller 101 may, for example, acquire location information of the control apparatus 200 based on image information captured by an external camera and, based on the acquired information, perform to set self-area. The main controller 101, similarly, based on the image information, may acquire position information of the hand or arm of the user U1, and set the self-area. The same self-area expansion process can be performed when user U1, for example, extends a hand (arm) that is not grasping the control apparatus 200 in either direction or extends a leg.

According to the third embodiment, it is possible to adjust to the shape of the self-area suitable for the posture of user U1.

### < Fourth embodiment >

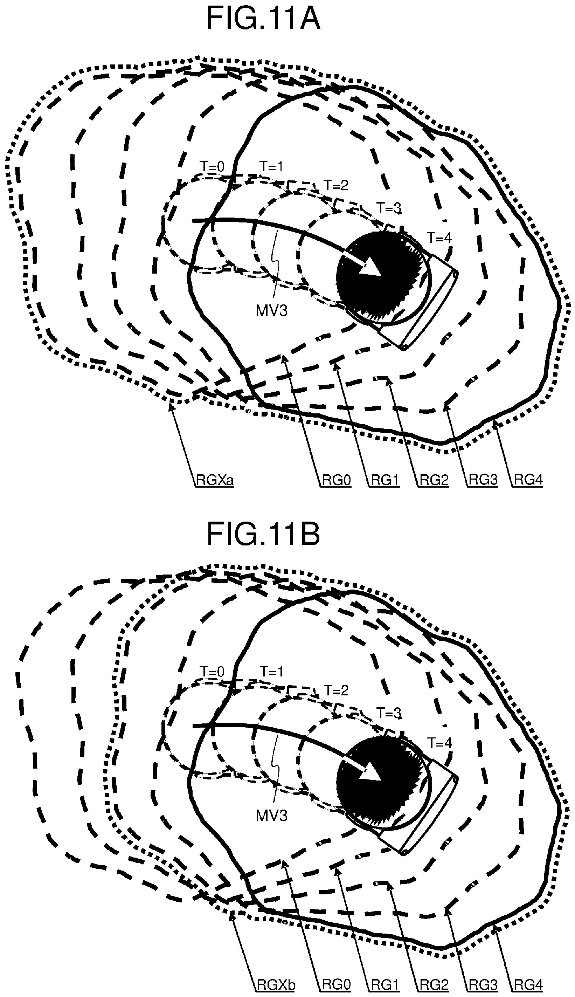

Next, the fourth embodiment is explained with reference to Figures 11a-11b. In the fourth embodiment, main controller 101 updates and expands the self-area. Note that, the same explanations as those already described may be omitted.

As shown in Figure 11a, when user U1 performs move MV3, self-area RG0 is set at time T=0, self-area RG1 is set at time T=1, self-area RG2 is set at time T=2, self-area RG3 is set at time T=3, and self-area RG4 is set at time T=4 (current time). Note that, in Figure 11a, the self-area s (RG0, RG1, RG2, and RG3) at time T=0 to 3 are shown as dashed lines, and self-area RG4 at time T=4 is shown as solid lines.

Then, the main controller 101 may perform the process of updating to the new self-area RGXa with the addition of the self-area set with the move MV3 of user U1. In other words, the main controller 101 may set the self-area (RGO) at time T=0, update to the self-area that added the shape of the self-area (RGO) to self-area (RG1), at time T=1, update to the self-area that added the shape of the self-area (RG0,RG1) to self-area (RG2), at time T=2. The main controller may also update to the self-area that added the shape of the self-area (RG0,RG1,RG2) to self-area (RG3), at time T=3. Then, the main controller may also update to the self-area (RGXa) that added the shape of the self-area (RG0,RG1,RG2,RG3) to self-area (RG4), at time T=4. Note that, in Figure 11a, the self-area (RGXa) is indicated by a dotted line.

In this way, main controller 101 updates to the self-area that overlaps the self-area of the past time and the self-area of the current time. However, when updating the self-area described using Figure 11A, the size of the self-area may become excessive. Therefore, the main controller 101 may update the self-area, as described below using Figure 11B.

As shown in Figure 11B, when user U1 performs move MV3 as in Figure 11A above, self-area RG0 is set at time T=0, self-area RG1 is set at time T=1, self-area RG2 is set at time T=2, and self-area RG3 is set at time T=3, and self-area RG4 is set at time T=4 (current time). Note that, in Figure 11b, the self-areas (RG0, RG1, RG2, and RG3) at times T=0 to T=3 are shown as dashed lines, and self-area RG4 at time T=4 is shown as solid lines.

Then, the main controller 101 may perform a process to update to the new self-area RGXb with the addition of the self-area set in accordance with the move MV3 of user U1. However, in this process, the main controller 101 deletes the information of the self-area that has passed a predetermined time, and performs updating. In other words, the main controller 101 updates to the self-area that overlapped the self-area of the past time from the current time to a predetermined time ago, and the self-area of the current time.

In other words, main controller 101 may set the self-area (RGO) at time T = 0, update to the self-area that added the shape of the self-area (RGO) to self-area (RG1), at time T=1, update to the self-area that added the shape of the self-area (RG0,RG1) to self-area (RG2), at time T=2. Then, the main controller 101 may update to the self-area that added the shape of the self-area (RG1,RG2) to self-area (RG3), at time T=3. Also, the main controller 101 may update to the self-area (RGXb) that added the shape of the self-area (RG2,RG3) to self-area (RG4), at time T=4. Note that, in Figure 11b, the self-area (RGXb) is indicated by a dotted line.

According to the fourth embodiment, main controller 101 can update to the expanded self-area at a predetermined time (T = 1 to 4), store the updated self-area in the memory unit, and perform warning processing using the updated self-area. Note that, in updating the self-area, the main controller 101 may store the self-area set at the predetermined time in the memory unit for processing. The main controller 101 may also delete unnecessary self-area information from the memory unit after a predetermined period of time has elapsed.

### < Fifth embodiment >

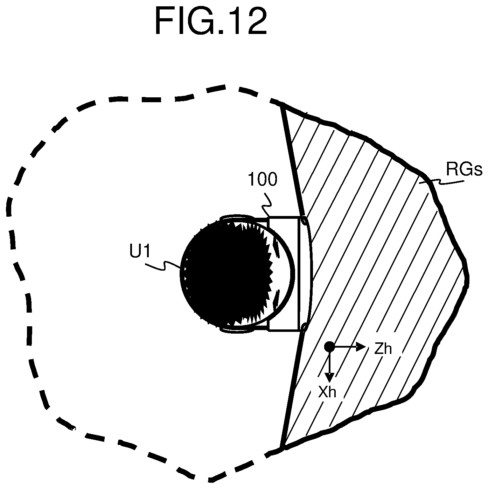

Next, the fifth embodiment is described with reference to Figure 12. In the fifth embodiment, main controller 101 performs the process of updating the self-area only in a specific range. Note that, the same explanations as those already described may be omitted.

As shown in Figure 12, when user U1 is facing a certain direction at a certain position, the area that can be recognized by the external camera of the information processing apparatus 100, is only the front included the hatched area enclosed by solid lines in the figure. Therefore, when updating the set self-area, the main controller 101 may update only the area that can be recognized by the external camera. In other words, the main controller 101 may update the self-area, only for the area RGs that is within the shooting range of the external camera among the set self-areas.

Also, as in the fourth embodiment, when user U1 moves and main controller 101 updates the self-area set at a predetermined time, main controller 101 may expand and update the self-area with respect to the range of the area RGs that can be recognized by the external camera.

According to the fifth embodiment, the self-area can be updated only with respect to the range that can be recognized by the external camera, and the shooting range of the external camera and the range of the self-area can be corresponded.

According to the above embodiment, an information processing apparatus (e.g., HMD) that can appropriately grasp the surrounding situation is provided. This can, as an example, contribute to the 9. creation of a foundation for industrial and technological innovation, that is Sustainable Development Goals (SDGs: Sustainable Development Goals) proposed by the United Nations.

Although the embodiment of the invention has been described above, needless to say, the configuration for realizing the technique of the invention is not limited to the above embodiment, and various modifications are possible. For example, the aforementioned embodiments are described in detail in order to explain the invention in an easy-to-understand manner, and are not necessarily limited to those having all the described configurations. It is also possible to replace some of the configurations of one embodiment with those of another embodiment, and it is also possible to add configurations of other embodiments to those of one embodiment. All of these are within the scope of the invention. In addition, the numerical values, messages, etc. that appear in the text and figures are only examples, and if the use of different ones, it does not impair the effect of the invention.

It is sufficient to be able to execute a predetermined process, for example, the programs used in each processing example, may be each independent programs, multiple programs may constitute a single application program. In addition, the order in which each process is performed may be swapped.

The functions, etc. of the aforementioned embodiments may be realized in hardware by, for example, designing some or all of them in an integrated circuitry. Also, they may be realized in software by a general-purpose processor, application-specific processor, microprocessor unit, CPU, or the like interpreting and executing an operating program that realizes the respective functions, etc. Processors include transistors and other circuits and are considered circuitry or processing circuitry. Also, the scope of software implementation is not limited, and hardware and software may be used together. In addition, some or all of each function may be implemented by a server. Note that, the server may be a local server, a cloud server, an edge server, a network service, or any other type of server, as long as it is capable of executing functions in cooperation with other components via communication, and the form does not matter. Information such as programs, tables, and files that realize each function may be stored in recording apparatus such as memory, hard disks, SSD (Solid State Drive), or other, in recording media such as IC cards, SD cards, and DVDs, or in apparatus on the communication network.

Furthermore, the control lines and information lines shown in the Figures are those that are considered necessary for explanation, and do not necessarily show all of the control lines and information lines on the product. In reality, almost all components may be considered to be interconnected.

In S208-S209, the example of warning display when there is an object etc., in the self-area was explained, but the main controller 101 may, for example, warn when an obstacle area enters the self-area, as explained above using Figure 9F. The main controller 101 may also warn when the boundary of the self-area is close to the obstacle area.

The information processing apparatus 100 may process, gestures of user U1 captured by an external camera as operation input. Here, for example, the storage 110 may store data that associates the operation content with the gesture, and the main controller 101 may refer to the data and perform processing according to the operation content.

The information processing apparatus 100 can be suitably used, for example, in the experience of a VR space. However, the information processing apparatus 100 can also be used for the experience of spaces related to MR (mixed reality) based on virtual spaces.

In the second embodiment, the example of expanding the self-area according to the moving speed was described, but main controller 101 may, for example, perform processing of switch the display according to the moving speed. When it is determined that the user is moving at or above a predetermined speed, main controller 101 may, for example, switch the image currently displayed on display 131 to an image taken by an external camera.

### Reference Signs List

- 100: information processing apparatus
- 101: main controller
- 103: RAM
- 110: storage
- 131: display
- 133: first image input unit
- 150: location information acquirer

## Claims

1. An information processing apparatus comprising: a processor,
wherein
the processor,
moves a self-area set by the information processing apparatus user in accordance with the user's movement,
determines the presence of obstacles that should be warned based on the self-area.

2. The information processing apparatus according to claim 1, wherein
the processor,
when the user moves, changes the shape of the self-area according to the user's movement speed.

3. The information processing apparatus according to claim 1, wherein
the processor,
changes the shape of the self-area according to the posture of the user.

4. The information processing apparatus according to claim 1, wherein
the processor,
when the user moves, update to self-area that overlapping the self-area at the past time and the self-area at the current time.

5. The information processing apparatus according to claim 1, wherein
the processor,
when the user moves, update to self-area that overlapping the self-area of the past time from the present to a predetermined time ago and the self-area of the present time.

6. The information processing apparatus according to claim 1, wherein
the processor,
when an obstacle enters the self-area, determines that there is an obstacle that should be warned.

7. The information processing apparatus according to claim 1, wherein
the processor,
in advance sets an obstacle area around the obstacle,
when at least part of the obstacle area is within the self-area, determines that there is an obstacle that should be warned.

8. The information processing apparatus according to claim 1, further comprising an external camera to capture images of real space,
wherein
the processor,
updates the self-area of the range that overlaps with the shooting range of the external camera.

9. The information processing apparatus according to claim 1, further comprising a location information acquisition unit is configured to using a GPS receiver,
wherein
the processor,
estimates the user's movement speed, based on the time variation of the location information acquired by the location information acquisition unit,
changes the shape of the self-area, based on the estimated movement speed.

10. The information processing apparatus according to claim 1, further comprising an external camera to capture images of real space,
wherein
the processor,
extracts feature points from the image information that the external camera captures and acquires, and acquires position information relative to the extracted feature points,
estimates the user's movement speed, based on the time variation of the acquired location information,
changes the shape of the self-area, based on the estimated speed of movement.

11. The information processing apparatus according to claim 1, further comprising an external camera to capture images of real space,
wherein
the processor,
acquires the position information of the user's hand or arm, based on the image information acquired by the external camera,
changes the shape of the self-area, based on the acquired position information of the user's hand or arm.

12. The information processing apparatus according to claim 1, further comprising a memory unit,
wherein
the processor,
stores in memory unit self-area at a predetermined time during the user's movement,
at the time of the user's movement, updates to self-area that overlapping the self-area of the past time stored in the memory unit and the self-area of the present time.

13. The information processing apparatus according to claim 1, further comprising a memory unit,
wherein
the processor,
stores in memory unit self-area at a predetermined time during the user's movement,
at the time of the user's movement, updates to self-area that overlapping self-area of the past time from the current time to a predetermined time ago stored in the memory unit, and the self-area of the present time.

14. The information processing apparatus according to claim 13, wherein
the processor,
deletes the past self-area before than the predetermined time, stored in the memory unit, form the memory unit.

15. The information processing apparatus according to claim 1, further comprising
a distance measuring device; and
a display,
wherein
the processor,
acquires the distance information to obstacle, based on the output from the distance measuring device,
determines the presence of obstacles that should be warned, further using the distance information,
when it is determined that there is an obstacle that should be warned, outputs that fact to the display.
